# EUROPEAN PATENT APPLICATION

(11) **EP 2 891 734 A1**
(43) Date of publication of application: **08.07.2015**
(21) Application number: 14200608.9
(22) Date of filing: 30.12.2014
(51) Int. Cl.: D01F 9/133, B01J 3/02, C01B 31/02

(54) **Method and apparatus for producing carbon thread**

(30) Priority: 30.12.2013 IT UD20130174
(71) Applicant: Tecnocarbon ant S.r.l., 10121 Torino (IT)
(72) Inventor: Ansaldi, Roberto, 10026 Santena (TO) (IT)
(74) Representative: Petraz, Gilberto Luigi

(57) **Abstract**

A method for producing carbon thread (F) comprises a step of feeding, to a production unit (13), at least three gaseous reagents, hydrogen, acetylene and carbon dioxide, and two liquid reagents, ferrocene and ethanol, a step, after the feed step, of injecting the reagents into a mixing zone (15) of a treatment chamber (12), to obtain a uniform and homogeneous mixture, a heat treatment step of the mixture in a heat treatment zone (17) of the treatment chamber (12), kept at a temperature comprised between 1100°C and 1300°C and at a vacuum pressure comprised between about 10⁻³ torr and about 10⁻¹ torr. Said step of feeding the three gaseous reagents comprises feeding hydrogen between 35% and 55% in volume of the overall volume of the gaseous reagents, feeding acetylene between 20% and 40% in volume of the overall volume of the gaseous reagents, and feeding carbon dioxide between 15% and 35% in volume of the overall volume of the gaseous reagents. Said injection step also provides to inject the gaseous reagents at a first pressure (P1), to inject the liquid reagents at a second pressure (P2), higher than the first pressure (P1), and provides to inject the reagents, gaseous and liquid, in an injection sequence acetylene-ferrocene-ethanol-hydrogen-carbon dioxide. Furthermore, said heat treatment step comprises a single heat passage at said temperature and at said vacuum pressure.

## Description

### FIELD OF THE INVENTION

The present invention concerns a method and apparatus for producing carbon thread.

In particular, the carbon thread thus produced is usable in the manufacturing of low-weight, high-resistance composite coverings, for example after the thread has been woven and pre-impregnated with resin.

The coverings can be applied, by way of non-restrictive example, for covering photovoltaic units.

### BACKGROUND OF THE INVENTION

It is known to produce carbon thread starting from polyacrylonitrile (PAN), an acrylonitrile-based polymer obtained by refining crude oil, normally through a process which includes three heat treatment steps, in particular, an oxidation conducted at 350°C, a heat treatment at 2000°C in an inert atmosphere, and a carbonization conducted at about 1500°C-1700°C. With this process graphene filaments are obtained, which are joined together to form the carbon thread which is subsequently woven and pre-impregnated with resin, to obtain a workable product.

A method is also known, from document WO-2005/007926, to produce carbon thread starting from carbon nanotubes (CNT), which provides to inject and then mix one or more gaseous reagents comprising a source of carbon into a reaction chamber, the reagents possibly having been first mixed with one or more gaseous fluids with the function of dilutants. The mixture is then introduced into a vacuum heat chamber and heated to a temperature comprised between 1100°C and 1500°C to obtain the molecular disaggregation of the hydrocarbons therein and the formation of nanotubes. Once they are woven together, the nanotubes form the carbon thread which is then extracted from the heat chamber and collected outside it.

A similar process for producing carbon thread is also known from document JP-A-2010/065339. This document describes an apparatus for the continuous production of CNT fibers according to a process which provides to introduce a source of carbon, a catalyzer and a vector into a reaction oven, and to continuously form the carbon nanotubes during a Chemical Vapour Deposition, or CVD.

Other techniques for producing carbon thread are also known through the creation of carbon nanotubes starting from carbon dioxide, examples of which are described in document EP'2540878 in the name of the Applicant. One disadvantage of known production methods is that they have high costs, in particular where a considerable amount of energy is required, for example during the three stages of heat treatment.

A further disadvantage of known processes derives from the fact that they use, as raw material, a material directly depending on crude oil, and therefore subject to great and often unpredictable price fluctuations.

It is also a disadvantage of known production processes that they allow to obtain thread containing a relatively low percentage of carbon, that is, comprised between 94% and 98%, corresponding to a less than perfect degree of purity.

Moreover, disadvantages of known processes also include the need to use large and therefore expensive plants, and the fact that they have considerable environmental impact, which compromises any large-scale and economical industrial application.

One purpose of the present invention is to perfect a method for producing carbon thread starting from carbon nanotubes which allows to obtain, continuously and on an industrial scale, high-purity carbon thread - that is, containing more than 98% of carbon - and also allows to reduce production times and consumption, in particular reducing the heat processes.

Another purpose of the present invention is to develop an apparatus that allows a massive and continuous production of carbon thread which is optimized for obtaining, in a rapid, efficient and reliable way, high-purity carbon thread.

Another purpose of the present invention is to supply an apparatus that is easy to build, inexpensive, easy to use and maintain, and that is also able to implement the method as above essentially without generating pollutant emissions and therefore with a much lower environmental impact than known processes and techniques.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method for producing carbon thread according to the present invention comprises:
- a step of feeding at least three gaseous reagents (hydrogen, acetylene and carbon dioxide) and two liquid reagents (ferrocene and ethanol) to a production unit provided with a treatment chamber,
- a step of injecting the reagents, after the feed step, into a mixing zone of the treatment chamber, to obtain a uniform and homogeneous mixture of the reagents,
- a heat treatment step of the mixture in a heat treatment zone of the treatment chamber, kept at a temperature comprised between 1100°C and 1300°C and at a vacuum pressure comprised between about 10⁻³ torr and about 10⁻¹ torr.

According to the present invention, the step of feeding the three gaseous reagents comprises feeding hydrogen between 35% and 55% in volume of the overall volume of the gaseous reagents, feeding acetylene between 20% and 40% in volume of the overall volume of the gaseous reagents, and feeding carbon dioxide between 15% and 35% in volume of the overall volume of the gaseous reagents. The injection step also provides to inject the gaseous reagents at a first pressure comprised between about 80 bar and about 120 bar, and to inject the liquid reagents at a second pressure, higher than the first pressure and comprised between about 250 bar and about 350 bar. The injection step, in a preferred solution, provides to inject the reagents, gaseous and liquid, in an injection sequence acetylene-ferrocene-ethanol-hydrogen-carbon dioxide.

According to the present invention, moreover, the heat treatment step comprises a single heat passage at the temperature and at the vacuum pressure.

The advantages deriving from the method according to the invention lie in the high purity of the carbon thread thus obtained, in addition to the limited energy consumption deriving from a single heat treatment step at a relatively low temperature and with extremely low emissions and, therefore, with an appreciably reduced environmental impact.

The reduction of energy consumption is consequently beneficial in terms of environmental sustainability and compatibility.

It has been experimentally ascertained, in fact, that the hydrogen introduced into the heat chamber of the production apparatus as above, with the function of acting as a vector and catalyzer for the reactions, allows to maintain a constant temperature inside the chamber with an energy autonomy of about 80 - 85%.

The choice of the reagents listed above, moreover, advantageoulsy allows to implement a process whose emissions are rich in oxygen and essentially devoid of pollutants, and therefore having an environmental impact considerably lower than in known processes.

In some forms of embodiment of the present invention, the injection sequence comprises the succession of a first operation to inject acetylene, with a duration equal to a first partial injection time of about 4 seconds, a second operation to inject ferrocene, with a duration equal to a second partial injection time of about 4 seconds, a third operation to inject ethanol, with a duration equal to a third partial injection time of about 2 seconds, a fourth operation to inject hydrogen, with a duration equal to a fourth partial injection time of about 6 seconds, and a fifth operation to inject carbon dioxide, with a duration equal to a fifth partial injection time of about 3 seconds.

A sequence thus structured guarantees the highest degree of mixing of the reagents; in particular, the introduction of acetylene at an early stage in the process is important, as it is the richest in carbon among the reagents and acts as the source for the component.

According to some aspects of the present invention, the method provides to carry out, during the heat treatment step, a molecular disaggregation of the reagents, a subsequent chemical vapor deposition for the deposition and growth of carbon nanotubes, and subsequent aggregation and weaving of the nanotubes in order to obtain the desired carbon thread.

The present invention also provides, after the carbon thread has been obtained during the heat treatment step, a step of discharging the carbon thread which includes at least winding the latter, by means of electrospinning.

By electrospinning (also known as electrostatic spinning) here and hereafter in the description, we mean the productive process that allows, as an expert in the field of polymers knows, to obtain through extrusion continuous filaments of synthetic material, very small in diameter, less than one micron.

One advantage of the present invention is that it obtains a carbon thread of a purity not less than 99%, owing to the use of a technique of electrospinning, or electrostatic spinning, optimized by the controlled introduction of the gaseous and liquid reagents, advantageously at different pressures.

The present invention also concerns an apparatus for the production of carbon thread according to the method described above, in which the apparatus comprises a feed unit for feeding reagents to a production unit configured to feed at least three gaseous reagents and two liquid reagents to a production unit through a feed pipe for each of the reagents. The production unit also includes a treatment chamber provided with a mixing zone of the reagents and a heat treatment zone fluidically connected with the mixing zone and kept at a temperature comprised between 1100°C and 1300°C by a heat source.

The feed unit comprises one or more gas compression units serving the feed pipes of gaseous reagents and configured to compress the gaseous reagents at a first pressure comprised between about 80 bar and about 120 bar, and a pressurization pump for each feed pipe of the liquid reagents configured to confer on the liquid reagents a second pressure comprised between about 250 bar and about 350 bar. In particular, the treatment chamber comprises an injector, positioned in correspondence with the mixing zone and provided with a plurality of injection channels, each of which fluidically connected to one of the feed pipes and configured to inject one of the reagents inside the mixing zone. The treatment chamber also comprises a diaphragm, attached to the heat treatment zone in correspondence with an outlet of the latter, and having an exit nozzle from which the carbon thread exits.

In some forms of embodiment, the injector has an axial-symmetrical shape developing around a median axis and comprises a hydrogen injection channel, a carbon dioxide injection channel, an acetylene injection channel, a ferrocene injection channel and an ethanol injection channel.

In a preferred form of embodiment, the hydrogen injection channel is disposed coaxial to the median axis and the other injection channels are inclined with respect to the median axis and converge toward one point thereon.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a diagram exemplifying structural and functional components of an apparatus for producing carbon thread according to the present invention;
- fig 2 is a plan view from above of the injector of the apparatus in fig. 1;
- fig. 3 is a section view from III to III of fig 2;
- figs. 4 and 5 are section views of different zones of a component of the apparatus in fig. 1;
- fig. 6 is a lateral elevation view of a diaphragm disposed at the exit of the component in figs. 4 and 5;
- fig. 7 is a section view from VII to VII of fig.6;
- fig. 8 is a plan view of the diaphragm in fig. 6;
- fig. 9 is a plan view of a cleaning disk disposed at exit of the apparatus in fig. 1;
- fig. 10 is a section view from X to X of fig. 8.

In the following description, the same reference numbers indicate identical parts of the apparatus for the production of carbon thread according to the present invention, also in different forms of embodiment. It is understood that elements and characteristics of one form of embodiment can be conveniently incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawings. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

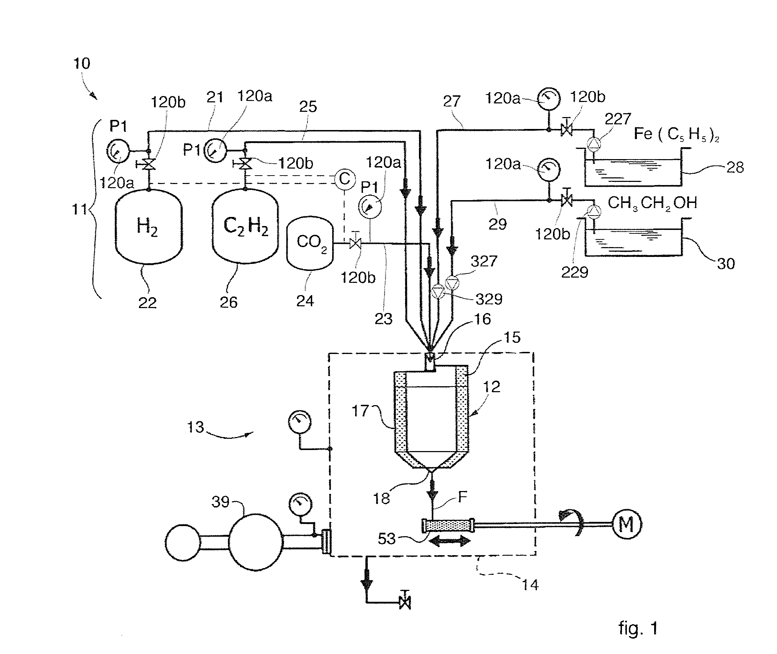

Fig. 1 is used to describe, schematically and by way of example, forms of embodiment of an apparatus 10 for the production of carbon thread F according to the present invention.

The apparatus 10 can include a production unit 13 configured to carry out processes of injection, mixing and heat treatment for the production of the carbon thread F according to a method of the present invention, as will become apparent from the following detailed description.

With reference to Fig. 1, the apparatus 10 can include a feed unit 11, configured to feed a plurality of reagents to the production unit 13.

The term "reagents" is understood to indicate all the compounds which, mixed together and processed as described below, contribute to the production of the carbon thread F, either as reagents proper in the reaction process, or as catalyzers, energy vectors or with other functions, as described below.

In implementations of the present invention, five reagents can be used: hydrogen gas (H₂), acetylene gas (C₂H₂), carbon dioxide gas (CO₂), liquid ferrocene (Fe(C₅H₅)₂) and liquid ethanol (CH₃CH₂OH).

The feed unit 11 can include a plurality of tanks, each configured to store a reagent, and a plurality of feed pipes, each of which is connected to one of the tanks and to the production unit 13 in order to collect the reagent from the former and feed it to the latter.

In some forms of embodiment, described by way of example with reference to fig. 1, the feed unit 11 can include a first pipe, or hydrogen feed pipe 21, connected to a first tank, such as a first cylinder 22 containing hydrogen, a second pipe, or carbon dioxide feed pipe 23, connected to a second tank, such as a cylinder 24 containing carbon dioxide, a third pipe, or acetylene feed pipe 25, connected to a third tank, such as a cylinder 26 containing acetylene, a fourth pipe, or ferrocene feed pipe 27, connected to a fourth tank 28 containing ferrocene, and a fifth pipe, or ethanol feed pipe 29, connected to a fifth tank 30 containing ethanol.

In possible variant solutions, the feed unit 11 can include one or more gas compression units, indicated by way of example in fig. 1 with a compressor C, serving the feed pipes 21, 23, 25, that is, for feeding the gaseous reagents.

The compressor C can be single-stage or advantageously multistage and configured to compress the gaseous reagents and apply to them a relatively low first pressure P1, for example comprised between 80 bar and 120 bar, in particular about 90 bar.

The compressor C can be configured to administer the gaseous reagents at a volumetric flow rate of about 5 m³/h or 120 1/min.

In possible implementations, the feed unit 11 can include one or more liquid pumping devices, configured to collect the liquid reagents from the respective tanks and push them through the corresponding feed pipes at the desired pressure.

Some example applications can provide that a first primary pump 227, for example a submersible pump, has the function of collecting ferrocene from the fourth tank 28 and carrying it into the ferrocene feed pipe 27.

A first pressurization pump 327 can be provided in association with the ferrocene feed pipe 27, located downstream of the primary pump 227 and upstream from the production unit 13, and configured to apply a second pressure P2 to the ferrocene.

Similarly, a second primary pump 229, for example a submersible pump, can be provided with the function of collecting ethanol from the fifth tank 30 and carrying it into the ethanol feed pipe 29.

A second pressurization pump 329 can be provided in association with the ethanol feed pipe 29, located downstream of the primary pump 229 and upstream of the production unit 13, and configured to apply a second pressure P2 to the ethanol.

The second pressure P2 is higher than P1, as applied to the gaseous reagents.

In some forms of embodiment, the pressure P2 can be relatively high, that is, higher than 250 bar, comprised, for example, between 250 bar and 350 bar, in particular about 300-320 bar.

It can be provided that the pressurization pumps 327 and 329 are configured to feed the liquid reagents to the production unit 13 in the form of fine droplets, with an average diameter comprised between about 1 µm and about 100 µm, and at a feeding speed that can even reach 300 m/s.

In other solutions, the pressurization pumps 327 and 329 can be configured to feed the liquid reagents to the production unit 13 in the form of multiphase spray, that is, consisting of gas and vapour, for example at a feeding speed that can even reach 10 m/s.

In possible implementations, control means 120, including for example pressure measurers 120a and/or regulation and intercept valves 120b, can be connected to the feed pipes 21, 23, 25, 27, 29 to control and verify the actual application of the two pressure values P1 and P2, respectively to the feed pipes 21, 23, 25 of gaseaous reagents, and to the feed pipes 27, 29 of liquid reagents.

In some forms of embodiment, a control and command unit can be provided, for example a microprocessor, operatively connected to the control means 120 with the function of managing inlet times, pressures and volumetric percentages of each reagent to be fed to the production unit 13, in order to perfect and make uniform the process of mixing the reagents and optimize the production process of the carbon thread F.

Fig. 1 can also be used to describe forms of embodiments of the apparatus 10 in which the production unit 13 can include a container 14 and a treatment chamber 12, contained in the container 14, and in which both the mixing of the reagents and the chemical reactions intended to obtain the carbon thread F take place.

The production unit 13 can also include a vacuum pump, such as, for example, a turbomolecular pump 39, configured to put the container 14 in a vacuum and apply to the treatment chamber 12 a depression comprised between about 10⁻¹ torr and 10⁻³ torr, corresponding essentially to a condition conventionally known as "medium vacuum" or "moderate vacuum."

In possible solutions, the treatment chamber 12 can include a mixing zone 15, within which the mixing of the five reagents takes place, and a heat treatment zone 17, fluidically connected to the mixing zone 15 and inside which the chemical reactions among the reagents take place.

The treatment chamber 12 can include, in correspondence with the mixing zone 15, an injector 16, to which the feed pipes 21, 23, 25, 27, 29 are connected, in order to inject in a controlled manner the five reagents into the mixing zone 15 of the treatment chamber 12.

The injector 16 can be configured to facilitate and accelerate the mixing of the reagents, and to obtain a complete and optimized mixture.

The treatment chamber 12 can also include a diaphragm 18, attached to the heat treatment zone 17, in correspondence with an exit area thereof. In particular, it is inside this diaphragm 18 that the carbon thread F is formed, which can be collected downstream of the diaphragm 18 by means of a winding device 53, which can be a mechanical winder or, in preferred solutions, a motorized electrospinner device.

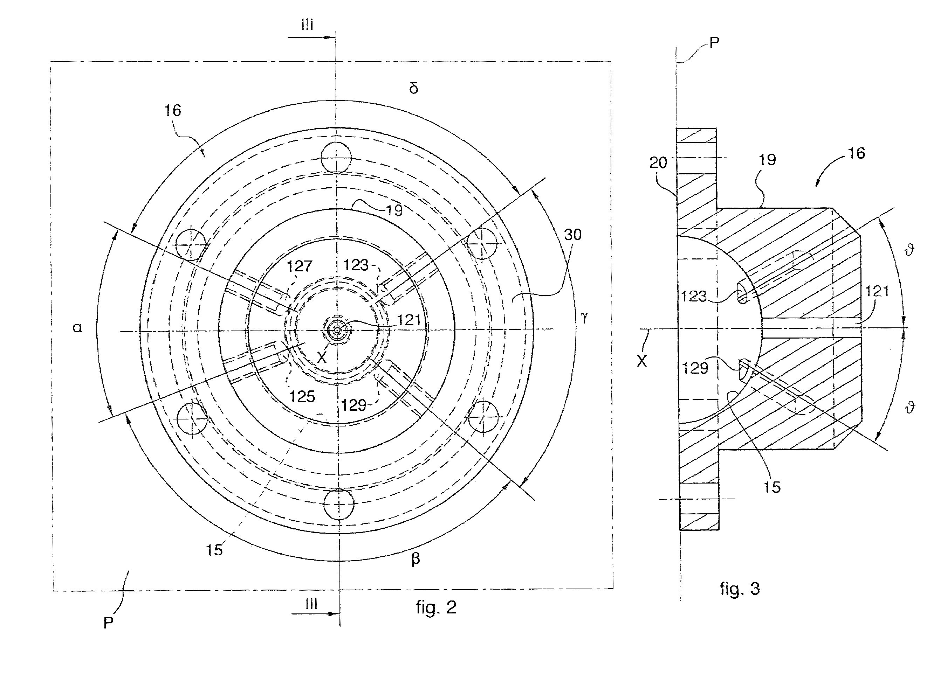

Figs. 2 and 3 are used to describe example forms of embodiment where the injector 16 has a shape developing around a median axis X, for example an axial-symmetrical shape.

The shape of the injector 16 can be defined, in possible solutions, by a main body 19, for example cylindrical, and a flange 20, for example discoidal, with the function of allowing to attach the injector 16 to an entrance of the mixing zone 15.

The main body 19 can be provided with a plurality of injection channels for the immission of the reagents used in the production of the carbon thread F. In particular, there can be five injection channels, one for each reagent, and each fluidically connected to one of the feed pipes 21, 23, 25, 27, 29.

The injection channels can include a first channel, or hydrogen injection channel 121, a second channel, or carbon dioxide injection channel 123, a third channel, or acetylene injection channel 125, a fourth channel, or ferrocene injection channel 127, and a fifth channel, or ethanol injection channel 129.

The injection channels 121, 123, 125, 127, 129 can advantageously be disposed according to angles of incidence of the injection and according to a spatial distribution in the main body 19 defined to optimize the mixing process, and therefore the quality of the carbon thread F obtainable with the method.

Figs. 2 and 3 can be used to describe possible solutions in which the hydrogen injection channel 121 is disposed coaxial to the median axis X of the injector 16.

The carbon dioxide 123, acetylene 125, ferrocene 127 and ethanol 129 injection channels can be inclined with respect to the median axis X and convergent to a point thereon.

In possible implementations, described by way of example with reference to fig. 2, on a base plane P orthogonal to the median axis X of the injector 16, the ferrocene injection channel 127 and the acetylene injection channel 125 can be reciprocally inclined by a first angle of radial inclination α comprised between 35° and 55°, for example about 45°.

The acetylene injection channel 125 and the ethanol injection channel 129 can be reciprocally inclined by a second angle of radial inclination β, measured on the base plane P, comprised between 105° and 135°, for example about 120°.

It can also be provided that the ethanol injection channel 129 and the carbon dioxide injection channel 123 are reciprocally inclined by a third angle of radial inclination γ, measured on the base plane P, comprised between 70° and 90°, for example about 80°.

Finally, the carbon dioxide injection channel 123 and the ferrocene injection channel 127 can be reciprocally inclined by a fourth angle of radial inclination δ, measured on the base plane P, comprised between 100° and 130°, for example about 115°.

In possible solutions, the second angle of radial inclination β is bigger than the fourth angle of radial inclination δ.

Fig. 3 is used to describe forms of embodiment of the injector 16, in which the injection channels 123, 125, 127, 129 are inclined with respect to the median axis X at a common angle of longitudinal inclination θ, measured on a plane orthogonal to the base plane P and containing the median axis X.

The angle of longitudinal inclination θ can be comprised between 25° and 40°, in particular at about 30°, for example 31°.

Some forms of embodiment can be provided in which the injection channels 123, 125, 127, 129 are all inclined, with respect to the median axis X, at different angles of longitudinal inclination, measured on a plane orthogonal to the base plane P and containing the median axis X, or inclined by equal angles, in groups.

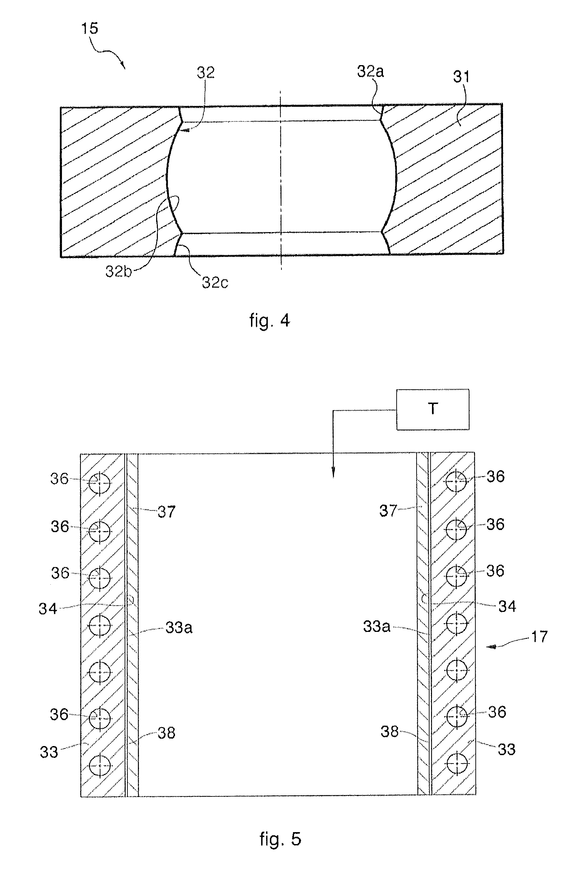

In some forms of embodiment, described by way of example with reference to fig. 4, the mixing zone 15 of the treatment chamber 12 can be defined by an annular body 31 provided with a through cavity 32.

The through cavity 32 can include an entrance portion 32a, essentially conical and configured converging toward the center line of the annular body 31, and through which the reagents arrive in the mixing zone 15 arriving from the injector 16.

The through cavity 32 can also include a central portion 32b, essentially barrel-shaped or rounded, and an exit portion 32c, essentially conical and configured diverging, from which a chemically and physically homogenous mixture of reagents emerges. It has been experimentally proven that this configuration allows to optimize the uniformity of the mixture of the five reagents.

From the exit portion 32c of the mixing zone 15 the mixture is then introduced by valve means, for example a needle valve, not shown in the drawings, into the heat treatment zone 17 of the treatment chamber 12.

Fig. 5 is used to describe forms of embodiment of the heat treatment zone 17, in which it has a cylindrical shape defined by a hollow body 33 that delimits an internal compartment 34.

It can be provided that the hollow body 33 integrates heat exchange means inside it, for example heat exchange channels 36 in which a heat-carrying fluid is made to circulate.

In some forms of embodiment, an internal surface 33a of the hollow body 33 facing toward the internal compartment 34 can be lined with a jacket made of ceramic material 37, configured to confer on the hollow body 33 resistance to wear and thermal stress. The hollow body 33, for example, can be made of a metallic material.

In possible forms of embodiment, an adjustable packing 38 can also be provided, interposed between the hollow body 33 and the jacket made of ceramic material 37.

A heat source T, shown only schematically in fig. 5, can be provided to maintain the interior of the heat treatment zone 17 of the treatment chamber 12 at a temperature generally comprised between 1100°C and 1300°C.

In the heat treatment zone 17, therefore, conditions of moderate vacuum (for example at about 10⁻¹ torr) and high temperature (for example 1100°C) are constantly maintained throughout the entire process of production of the carbon thread F.

These conditions allow the onset of chemical and physical reactions which obtain carbon nanotubes as a semi-finished product and subsequently the carbon thread F from said nanotubes, as will be explained in greater detail below.

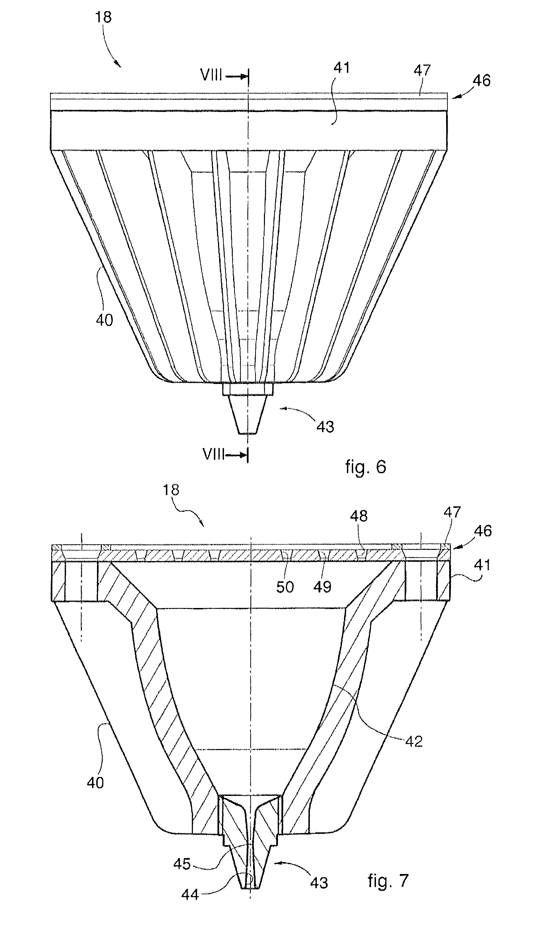

Figs. 6 and 7 can be used to describe forms of embodiment of the diaphragm 18 through which the carbon thread F is formed and from which it exits.

The diaphragm 18 can include a body 40, hollow inside and conical in shape, or with a tapered shape, similar to a cone, and provided at one end with a flange 41 to attach the diaphragm 18 to the lower end of the treatment chamber 12, in correspondence with the outlet of the heat treatment zone 17.

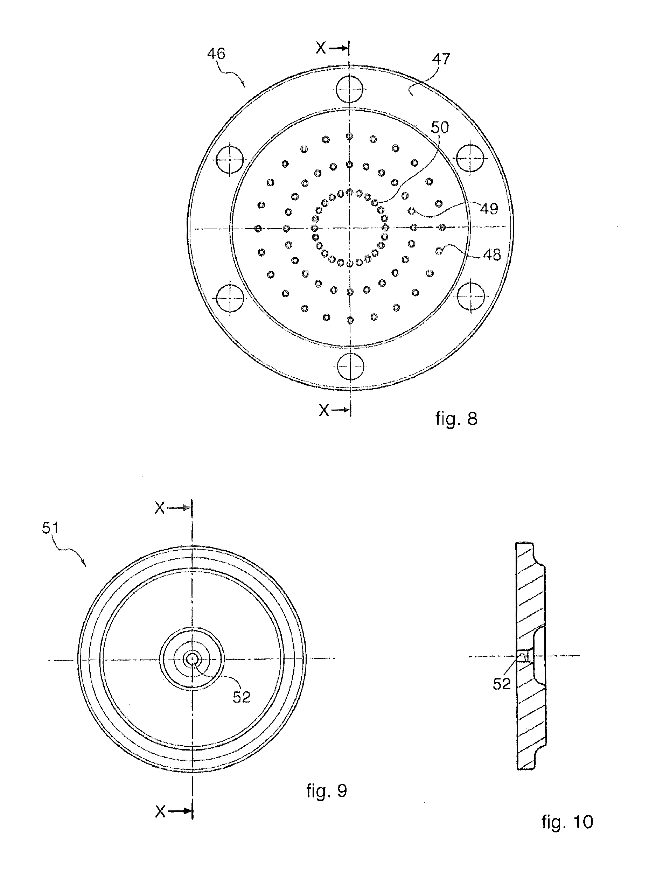

In some forms of embodiment, the diaphragm 18 can include a plate 46, attached to the flange 41 and provided with a plurality of perforations 48, 49, 50, for example with a conical cross section (fig. 7), disposed in order along three respective concentric circular crowns (fig. 8).

Passing through the perforations 48, 49, 50 of the plate 46, the nanotubes allow to form the carbon thread F.

In some solutions the diaphragm 18 can include a complementary flange 47, for example annular shaped, with the function of perfecting and reinforcing the attachment of the plate 46 to the flange 41.

Figs. 6 and 7 can be used to describe forms of embodiment of the diaphragm 18, in which it can also include an exit nozzle 43, made for example of tempered steel and positioned at one end of the body 40, opposite the end where the flange 41 is positioned.

In some forms of embodiment, the body 40 can be configured converging from the treatment zone 17 toward the exit nozzle 43, from which the carbon thread F exits, towards the winding device 53.

The exit nozzle 43 can be provided with an exit channel 44 for the carbon thread F, configured to define a convergent-divergent passage.

In possible implementations, the body 40 can be internally lined with a ceramic jacket 42 with the function of reinforcement against wear.

In other possible implementations, which can be combined with all the forms of embodiment described above, the exit channel 44 can be lined with an antiwear layer 45, made for example from ceramic or hard metal filling material.

Figs. 9 and 10 can be used to describe forms of embodiment of a cleaning disk 51, connected to the exit nozzle 43 and having a central hole 52, for example with blades, that defines a narrow central passage having the function of cleaning the carbon thread F from possible local over-deposits.

On the basis of the above, the method for producing carbon thread F according to the present invention comprises a feeding step in which the five reagents which constitute the mixture are fed to the injector 16 in metered manner, controlled according to volumetric parameters and varying times, depending on whether "single wall," "multi-wall" or mixed carbon nanotubes (CNT) are being produced.

In possible forms of embodiment of the invention, the feeding step can provide that the gaseous reagents are fed with the following volumetric parameters: hydrogen (H₂) comprised between 35% and 55% in volume, preferably between 40% and 50%, for example 46%, with respect to the overall volume of the gaseous reagents, acetylene (C₂H₂) comprised between 20% and 40% in volume, preferably between 25% and 35%, for example 30%, with respect to the overall volume of the gaseous reagents, carbon dioxide (CO₂) comprised between 15% and 35% in volume, preferably between 20% and 30%, for example 24%, with respect to the overall volume of the gaseous reagents.

Once they have been fed to the injector 16, the reagents are injected into the treatment chamber 12, in particular into the mixing zone 15, in a subsequent injection step of the reagents. In particular, the gaseous reagents are injected at pressure P1, and the liquid reagents at pressure P2.

The injection step can be executed according to an injection sequence with a duration equal to an injection time of about 19 seconds.

The injection sequence can include a first injection operation, with a duration equal to a first partial injection time of about 4 seconds, during which acetylene is injected into the mixing zone 15.

After the first injection operation, it is possible to execute a second injection operation, with a duration equal to a second partial injection time of about 4 seconds, during which ferrocene is injected into the mixing zone 15.

A third injection operation can be carried out following the second injection operation; it can have a duration equal to a third partial injection time of about 2 seconds, and provide to inject ethanol into the mixing zone 15.

The injection sequence can include a fourth injection operation, after the third injection operation, with a duration equal to a fourth partial injection time of about 6 seconds, during which hydrogen is injected into the mixing zone 15.

The injection sequence can finally include a fifth injection operation, with a duration equal to a fifth partial injection time of about 3 seconds, during which carbon dioxide is injected into the mixing zone 15.

The injection sequence thus structured has the advantageous purpose of introducing first of all acetylene in the mixing zone 15, which, as it is rich in carbon, functions as source of said material, followed by ferrocene, which functions as a catalyzer for the chemical reactions.

According to some forms of embodiment of the invention, the method can provide to continuously repeat the feeding sequence.

In the mixing zone 15 of the treatment chamber 12, therefore, during a subsequent mixing step, a uniform, homogeneous mixture is formed, having the composition as described above.

The mixture produced in the mixing zone 15 then passes into the heat treatment zone 17, which, as we said, is maintained in depression and heated to a temperature comprised between 1100°C and 1300°C, and where a heat treatment step takes place in a single heat passage.

The possibility of performing a single heat passage has the advantage of reducing costs and production times of the carbon thread F.

The presence of hydrogen in the mixture has the function of feeding the heat regulation, allowing the desired temperature to be maintained inside the heat treatment zone 17 and conferring on the process a thermal autonomy of up to 85%.

This gives a further important contribution to the reduction of energy consumption in the production method of carbon thread F.

During the heat treatment step, the molecular disaggregation of the hydrocarbons takes place, with the formation of carbon nanotubes (CNT), which can be the "single wall" or "multi-wall" type, depending on the process parameters used.

Under the effect of the catalyzer, consisting of the ferrocene, during the heat treatment step, the carbon nanotubes aggregate and interweave, and, passing through the plate 46, form the carbon thread F inside the diaphragm 18.

The function of the ethanol, during the heat treatment step, is to facilitate the Chemical Vapour Deposition (CVD) of the carbon for the formation and extension of the nanotubes.

The presence of carbon dioxide, during the heat treatment step, brings a further quantity of carbon required to complete the group of nanotubes.

The conditions inside the heat treatment zone 17 are such that the Chemical Vapour Deposition (CVD) even occurs without a metallic substrate, which is normally necessary for the deposition process.

The chemical and physical reactions which are triggered during the heat treatment step result in emissions that are nearly devoid of pollutants and are rich in oxygen, and therefore compatible with the principles of environmental sustainability.

During a step where the carbon thread F is discharged, following the heat treatment step, the carbon thread F produced through the heat treatment step is collected by the winding device 53 after it has passed through the exit nozzle 43 and after being cleaned of local over-deposits by the cleaning disk 51, in order to be subsequently spun according to an electrostatic spinning technique, or electrospinning.

Using the method described above, it is possible to obtain a carbon thread F with a purity of not less than 99%, thanks to the controlled introduction into the treatment chamber 12 of the liquid and gaseous reagents, advantageously at different pressures, during the injection step, and facilitated also by use of the electrostatic spinning technique.

In some forms of embodiment of the method in question, a step of coating the carbon thread F can also be provided, for example by impregnation with resin.

Subsequently, the carbon thread F can be stored as it is, or pre-treated with resin for subsequent use.

It is therefore clear that the method according to the present invention allows to produce carbon thread F with a high degree of purity and relatively low production costs, owing to the use of a single heat passage, and with next to no emissions that entail an extremely reduced environmental impact.

It is clear that modifications and/or additions of parts can be made to the method and apparatus for producing carbon thread as described heretofore, without departing from the field and scope of the present invention.

It is also clear that, although the present invention has been described with reference to some specific examples, a person of skill in the art shall certainly be able to achieve many other equivalent forms of method and apparatus, having the characteristics as set forth in the claims and hence all coming within the field of protection defined thereby.

## Claims

1. Method for producing carbon thread (F) comprising:
- a step of feeding at least three gaseous reagents and two liquid reagents to a production unit (13) provided with a treatment chamber (12), said three gaseous reagents including hydrogen, acetylene and carbon dioxide and said two liquid reagents including ferrocene and ethanol,
- a step of injecting said reagents, after said feed step, into a mixing zone (15) of said treatment chamber (12), to obtain a uniform and homogeneous mixture of said reagents,
- a heat treatment step of said mixture in a heat treatment zone (17) of said treatment chamber (12), kept at a temperature comprised between 1100°C and 1300°C and at a vacuum pressure comprised between about 10⁻³ torr and about 10⁻¹ torr,
**characterized in that**:
- said step of feeding the three gaseous reagents comprises feeding hydrogen between 35% and 55% in volume of the overall volume of the gaseous reagents, feeding acetylene between 20% and 40% in volume of the overall volume of the gaseous reagents, and feeding carbon dioxide between 15% and 35% in volume of the overall volume of the gaseous reagents,
- said injection step provides to inject the gaseous reagents at a first pressure (P1) comprised between about 80 bar and about 120 bar, to inject the liquid reagents at a second pressure (P2), higher than said first pressure (P1) and comprised between about 250 bar and about 350 bar, said injection step providing to inject said reagents, gaseous and liquid, in an injection sequence acetylene-ferrocene-ethanol-hydrogen-carbon dioxide;
- said heat treatment step comprises a single heat passage at said temperature and at said vacuum pressure.

2. Method as in claim 1, **characterized in that** said injection sequence comprises the succession of a first operation to inject acetylene, with a duration equal to a first partial injection time of about 4 seconds, a second operation to inject ferrocene, with a duration equal to a second partial injection time of about 4 seconds, a third operation to inject ethanol, with a duration equal to a third partial injection time of about 2 seconds, a fourth operation to inject hydrogen, with a duration equal to a fourth partial injection time of about 6 seconds, and a fifth operation to inject carbon dioxide, with a duration equal to a fifth partial injection time of about 3 seconds.

3. Method as in claim 1 or 2, **characterized in that** it provides to carry out, during said heat treatment step, a molecular disaggregation of said reagents, a subsequent chemical vapor deposition for the deposition and growth of carbon nanotubes, and subsequent aggregation and weaving of said nanotubes in order to obtain said carbon thread (F).

4. Method as in claim 3, **characterized in that** it provides, after said carbon thread (F) has been obtained during said heat treatment step, a step of discharging said carbon thread (F) which includes at least winding the latter, by means of electrospinning.

5. Apparatus for the production of carbon thread (F), comprising a feed unit (11) for feeding reagents and a production unit (13), said feed unit (11) being configured to feed at least three gaseous reagents and two liquid reagents to said production unit (13) through a feed pipe (21, 23, 25, 27, 29) for each of said reagents, said production unit (13) including a treatment chamber (12) provided with a mixing zone (15) of said reagents and a heat treatment zone (17) fluidically connected with said mixing zone (15) and kept at a temperature comprised between 1100°C and 1300°C by a heat source (T), **characterized in that** said feed unit (11) comprises one or more gas compression units (C) serving the feed pipes (21, 23, 25) of said gaseous reagents and configured to compress said gaseous reagents at a first pressure (P1) comprised between about 80 bar and about 120 bar, and a pressurization pump (327, 329) for each feed pipe (27, 29) of said liquid reagents configured to confer on said liquid reagents a second pressure (P2) comprised between about 250 bar and about 350 bar, **in that** said treatment chamber (12) comprises an injector (16), positioned in correspondence with said mixing zone (15) and provided with a plurality of injection channels (121, 123, 125, 127, 129), each of which fluidically connected to one of said feed pipes (21, 23, 25, 27, 29) and configured to inject one of said reagents inside said mixing zone (15), and **in that** said treatment chamber (12) comprises a diaphragm (18), attached to said heat treatment zone (17) in correspondence with an outlet of the latter, and having an exit nozzle (43) from which said carbon thread (F) exits.

6. Apparatus as in claim 5, **characterized in that** said injector (16) has an axial-symmetrical shape developing around a median axis (X) and comprises a hydrogen injection channel (121), a carbon dioxide injection channel (123), an acetylene injection channel (125), a ferrocene injection channel (127) and an ethanol injection channel (129), wherein said hydrogen injection channel (121) is disposed coaxial to said median axis (X) and the other injection channels (123, 125, 127, 129) are inclined with respect to said median axis (X) and converging toward one point thereon.

7. Apparatus as in claim 6, **characterized in that** the ferrocene injection channel (127) and the acetylene injection channel (125) are reciprocally inclined by a first angle of radial inclination (α) comprised between 35° and 55°, the acetylene injection channel (125) and the ethanol injection channel (129) are reciprocally inclined by a second angle of radial inclination (β) comprised between 105° and 135°, the ethanol injection channel (129) and the carbon dioxide injection channel (123) are reciprocally inclined by a third angle of radial inclination (γ) comprised between 70° and 90°, and the carbon dioxide injection channel (123) and the ferrocene injection channel (127) are reciprocally inclined by a fourth angle of radial inclination (δ) comprised between 100° and 130°, said first (α), second (β), third (γ) and fourth (δ) angles of radial inclination being measured on a base plane (P) orthogonal to the median axis (X) of the injector (16).

8. Apparatus as in claim 7, **characterized in that** said second angle of radial inclination (β) is bigger than said fourth angle of radial inclination (δ).

9. Apparatus as in claim 7 or 8, **characterized in that** said injection channels of carbon dioxide (123), acetylene (125), ferrocene (127), ethanol (129) are inclined with respect to the median axis (X) of said injector (16) by a common angle of longitudinal inclination (0), measured on a plane orthogonal to the base plane (P) and containing said median axis (X).
